**Europäisches Patentamt**

**European Patent Office**

**Office européen des brevets**

(11) Veröffentlichungsnummer: **0 267 533 B1**

# EUROPÄISCHE PATENTSCHRIFT

(45) Veröffentlichungstag der Patentschrift: **13.05.92**

(21) Anmeldenummer: **87116244.2**

(22) Anmeldetag: **04.11.87**

(51) Int. Cl.⁵: **B65D 19/44**, B23Q 7/10

(54) **Palette zum Bereithalten von Gegenständen in vorbestimmten Stellungen.**

(30) Priorität: **11.11.86 DE 3638502**

(43) Veröffentlichungstag der Anmeldung:
**18.05.88 Patentblatt 88/20**

(45) Bekanntmachung des Hinweises auf die
Patenterteilung:
**13.05.92 Patentblatt 92/20**

(84) Benannte Vertragsstaaten:
**AT BE CH DE ES FR GB IT LI NL SE**

(56) Entgegenhaltungen:
**DE-U- 8 614 553**
**FR-A- 1 283 923**

(73) Patentinhaber: **TRAUB Aktiengesellschaft**
**Ulmer Strasse 49-55**
**W-7313 Reichenbach/Fils(DE)**

(72) Erfinder: **Wiesner, Franz, Dipl.-Ing.(FH)**
**Hopfenweg 5**
**W-7311 Owen(DE)**

(74) Vertreter: **Goetz, Rupert, Dipl.-Ing. et al**
**Wuesthoff & Wuesthoff Patent- und Rechts-**
**anwälte Schweigerstrasse 2**
**W-8000 München 90(DE)**

**Beschreibung**

Die Erfindung betrifft eine Palette zum Bereithalten von Gegenständen in vorbestimmten Stellungen, insbesondere für eine automatisierte Fertigung, mit

- einem Palettenrabmen, der zwei parallel zueinander angeordnete Rahmenteile mit je einer Auflagefläche und je einem nach innen ragenden Schenkel aufweist,
- Aufnahmeelementen, die auf der Auflagefläche je eines Rahmenteils aufliegen und zum Aufnehmen mindestens je eines Gegenstands ausgebildet sind, und
- Klemmvorrichtungen an beiden Enden jedes Aufnahmeelements, die in einem klemmenden Zustand unter den Schenkel des benachbarten Rahmenteils greifend mit einer nach oben gerichteten Klemmkraft das Aufnahmeelement am zugehörigen Rahmenteil festgeklemmt halten und in einem gelösten Zustand eine Verstellung des Aufnahmeelements in Längsrichtung der Rahmenteile zulassen, wobei
- mindestens eine der Klemmvorrichtungen an jedem Aufnahmeelement einen längs des Aufnahmeelements verschiebbaren Schieber aufweist.

Paletten dieser Gattung werden beispielsweise verwendet, um Werkstücke an Bearbeitungsmaschinen bereitzuhalten, damit sie durch programmgesteuert arbeitende Handhabungsgeräte zuverlässig ergriffen, an die Bearbeitungsmaschine übergeben und nach der Bearbeitung lagerichtig zurückgelegt werden können. In gleicher Weise kann eine platzsparende und lagerichtige Speicherung von automatisch austauschbaren Werkzeughaltern, Spann- und Greifbackensätzen für das Umrüsten einer Bearbeitungsmaschine notwendig sein. Die Palettenrahmen sind vorzugsweise geschlossene Rechtecke mit genormten Außenmaßen.

Art und Größe der Gegenstände, die auf solchen Paletten bereitgehalten werden sollen, können von einem Anwendungsfall zum nächsten sehr stark wechseln; deshalb sind die Aufnahmeelemente mittels Klemmvorrichtungen an den Palettenrahmen derart befestigt, daß sie nach Lösen der Klemmvorrichtungen verstellt, nötigenfalls auch ausgewechselt, werden können.

Bei einer bekannten gattungsgemäßen Palette (DE-U 86 14 553) gehört zu jedem Schieber eine Schraube, die sich durch ein Langloch nahe dem zugehörigen Ende des Aufnahmeelements hindurcherstreckt, und in ein Muttergewinde im Schieber eingeschraubt ist, sodaß dieser durch Festziehen der Schraube gegen die Unterseite des nach innen ragenden Schenkels des zugehörigen Rahmenteils gespannt wird. Zum Positionieren der Aufnahmeelemente ist ein Positioniergerät mit einem Positionierschlitten vorgesehen, der auf einem Gerätegestell verfahrbar ist. An diesem werden entsprechend der Anordnung der Aufnahmeelemente am Palettenrahmen Querstücke befestigt, auf welche die Aufnahmeelemente aufgesetzt werden, um auf diese Weise positioniert und anschließend am Palettenrahmen befestigt zu werden.

Bei der bekannten Klemmbefestigung der Aufnahmeelemente besteht die Gefahr, daß diese samt von ihnen gehaltenen Gegenständen infolge von Stößen beim Transport verrutschen, wenn die Schrauben nicht sehr fest angezogen sind. Diese Gefahr ließe sich zwar beseitigen, indem man die Schrauben durch Löcher nicht nur in den Aufnahmeelementen, sondern auch in den zugehörigen Rahmenteilen des Palettenrahmens hindurchsteckt. Solche Löcher in den Rahmenteilen müssen aber in Abständen voneinander angeordnet werden, die um einiges größer sind als ihre Durchmesser; dadurch werden die Möglichkeiten eingeschränkt, die Lage der Aufnahmeelemente an Form und Größe der bereitzuhaltenden Gegenstände oder an Förderschritte eines taktweise zwischen verschiedenen Bearbeitungsmaschinen bewegbaren Förderers genau anzupassen.

Bei einer anderen bekannten Palette (DD-A 215 052) sind an einem Grundrahmen als Werkstückfixierelemente Holmpaare angeordnet, die sich senkrecht nach oben erstrecken und mittels am Grundrahmen gelagerter Gewindespindeln in der Ebene des Grundrahmens derart einstellbar sind, daß Werkstücke zwischen den Holmen sicher gestapelt werden können. Als Unterlage für die Werkstücke dient ein auf den Grundrahmen aufgesetzter Hubrahmen, der im Verstellbereich der Holmpaare mit Schlitzen ausgestattet ist, durch welche die Holmpaare hindurchgesteckt sind. Der Hubrahmen läßt sich nach dem Stapeln der Werkstücke vom Grundrahmen abheben, mit dem die Holme verbunden bleiben. Die Werkstücke sind dann jedoch am Hubrahmen nicht mehr formschlüssig gehalten und können bei Erschütterungen verrutschen.

Der Erfindung liegt die Aufgabe zugrunde, eine Palette der eingangs beschriebenen Gattung derart weiterzubilden, daß die Aufnahmeelemente auf einfache und bei Bedarf leicht automatisierbare Weise in kleinen Schritten verstellbar und in ihrer gewählten Stellung auf dem Palettenrahmen sicher festgehalten sind.

Die Aufgabe ist erfindungsgemäß dadurch gelöst, daß

- die Rahmenteile an der Unterseite ihres nach innen ragenden Schenkels je eine zahnstangenartige Profilierung aufweisen,
- an den Klemmvorrichtungen je ein Profilteil angeordnet ist, das in die Profilierung am zugehörigen Rahmenteil einrastbar ist,

- die Schieber von einer Feder zum zugehörigen Rahmenteil hin vorgespannt sind, und
- zum Rückstellen der Schieber gegen die Kraft der zugehörigen Feder und zum Abheben des Aufnahmelements vom Palettenrahmen eine Rückstellvorrichtung vorgesehen ist.

Die Profilierungen lassen sich mit geringen Teilungen, beispielsweise in der Größenordnung von 1 bis 3 mm gestalten, so daß die Aufnahmeelemente entsprechend feinstufig verstellt werden können. Die Profilierungen an den Rahmenteilen und die dazu passenden Profilteile an den Schiebern sind in sicherem gegenseitigem Eingriff gehalten, solange man die Schieber nicht willkürlich aus ihrer Stellung verdrängt, in der sie durch die Vorspannung der zugehörigen Feder gehalten werden. Es ist deshalb nicht zu befürchten, daß ein Aufnahmeelement sich unbeabsichtigt auf dem zugehörigen Palettenrahmen verschiebt. Durch die Anordnung der Profilierungen an der Unterseite des vom zugehörigen Rahmenteil nach innen ragenden Schenkels wird die Gefahr vermieden, daß die Profilierungen durch rauhes Aufsetzen der Aufnahmeelemente auf den Palettenrahmen beschädigt werden.

Um die Sicherheit gegen eine unbeabsichtigte Bewegung der Schieber zu erhöhen, hat vorzugsweise jeder Schieber eine Keilform mit einem im Bereich der Selbsthemmung liegenden Schrägungswinkel.

Die Profilteile sind vorzugsweise an der Oberseite der Schieber angeordnet.

Die Profilierung kann von einer am zugehörigen Rahmenteil befestigten Gewindestange gebildet sein. Gewindestangen mit einer Steigung in der Größenordnung von einem oder wenigen mm sind handelsüblich und lassen sich leicht an den Rahmenteilen befestigen, beispielsweise festschweißen, so daß sie auf insgesamt billige Weise eine Profilierung mit der gewünschten, mehr oder weniger feinen Teilung ergeben.

Die Schieber und zugehörigen Federn sind zweckmäßigerweise in je einem Gehäuse angeordnet, das an der Unterseite des zugehörigen Aufnahmeelements befestigt ist. In diesem Fall ist es zweckmäßig, wenn die Gehäuse an je einem Ende eine Schräge aufweisen, die das zugehörige Aufnahmeelement beim Aufsetzen auf den Palettenrahmen zentriert.

Es ist ferner vorteilhaft, wenn jede Rückstellvorrichtung eine Welle aufweist, die ein Wellenende mit einem radialen Vorsprung hat, und jedes Aufnahmeelement mindestens eine Aussparung aufweist, in die das Wellenende in einer Ruhestellung der Welle einsetzbar ist, und in der das Wellenende in eine Montagestellung drehbar ist, in welcher der Vorsprung mindestens einen ihm zugeordneten Schieber gegen die Kraft der zugehörigen Feder vom zugehörigen Rahmenteil weggedrängt. Wenn beide Klemmvorrichtungen an einem Aufnahmeelement je einen Schieber aufweisen, kann die Rückstellvorrichtung so gestaltet sein, daß sie beide Schieber gemeinsam betätigt.

Die Welle ist vorzugsweise in einem Lagerkörper gelagert, der einen in der Aussparung zentrierbaren Ansatz aufweist. Auf diese Weise lassen sich Reaktionskräfte der vom radialen Vorsprung auf einen Schieber ausgeübten Kraft auf kürzest möglichem Weg abstützen.

Schließlich ist es vorteilhaft, wenn die Aussparung dem Querschnitt des Wellenendes samt radialem Vorsprung angepaßt und derart angeordnet ist, daß das Wellenende nur in der Ruhestellung der Welle aus der Aussparung herausziehbar ist. Auf diese Weise läßt sich jede Rückstellvorrichtung unverlierbar mit je einem Aufnahmeelement verriegeln, bis dieses an einer gewünschten Stelle am Palettenrahmen befestigt ist.

Ausführungsbeispiele der Erfindung werden im folgenden anhand schematischer Zeichnungen mit weiteren Einzelheiten beschrieben. Es zeigt:

| | |
|---|---|
| Fig. 1 | eine Schrägansicht einer Palette in zerlegtem Zustand, |
| Fig. 2 | den senkrechten Querschnitt II-II in Fig. 1, |
| Fig. 3 | einen Teilschnitt der zusammengebauten Palette mit erfindungsgemäßen Aufnahmeelementen, |
| Fig. 4 | die Teildraufsicht IV in Fig. 3, |
| Fig. 5 | die Teilansicht V in Fig. 3, |
| Fig. 6 | einen der Fig. 3 entsprechenden Teilschnitt der Palette bei ihrer Zerlegung, |
| Fig. 7 | die Teildraufsicht VII in Fig. 6, |
| Fig. 8 | die Teilansicht VIII in Fig. 7, |
| Fig. 9 | einen der Fig. 3 entsprechenden Teilschnitt bei zerlegter Palette, |
| Fig. 10 | die Teildraufsicht X in Fig. 9, |
| Fig. 11 | die Teilansicht XI in Fig. 9, |
| Fig. 12 | einen senkrechten Querschnitt durch abgewandelte Teile einer erfindungsgemäßen Palette, |
| Fig. 13 | die Teildraufsicht XIII in Fig. 12, |
| Fig. 14 | den waagerechten Teilschnitt XIV-XIV in Fig. 12 und |
| Fig. 15 | den gleichen Teilschnitt wie Fig. 14, jedoch in einer Ruhestellung. |

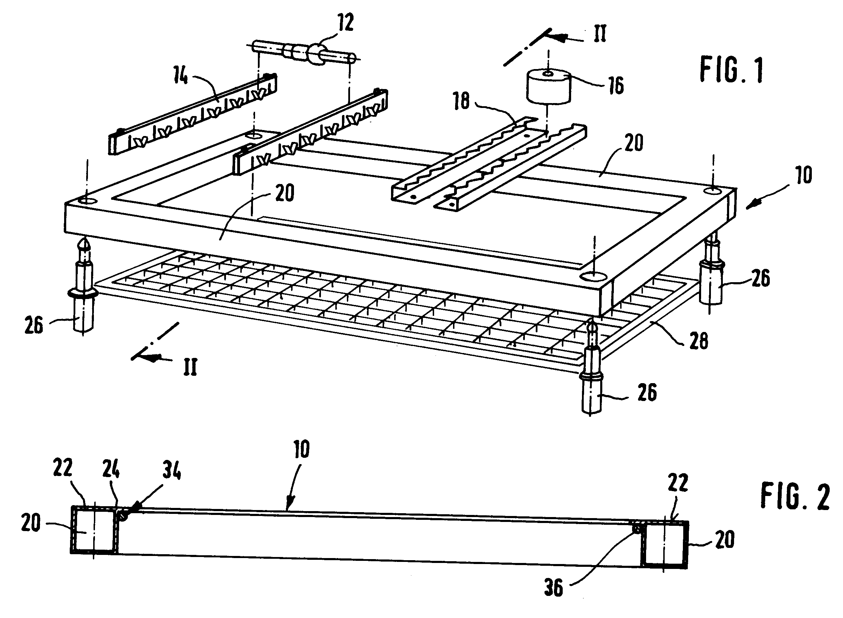

Die dargestellte Palette hat einen rechteckigen Palettenrahmen 10, der gemäß Fig. 1 zum Bereithalten wellenartiger Gegenstände 12 mit einem Paar Aufnahmeelemente 14 üblicher Art und/oder zum Bereithalten scheibenförmiger Gegenstände 16 mit einem Paar Aufnahmeelemente 18 ebenfalls üblicher Art ausgerüstet werden kann. Der Palettenrahmen 10 hat zwei parallele, längsgerichtete Rahmenteile 20 mit je einer Auflagefläche 22 und je einem nach innen ragenden Schenkel 24.

Die Aufnahmeelemente 14 und/oder 18 lassen sich auf die Auflageflächen 22 derart auflegen, daß sie den Zwischenraum zwischen den längsgerichteten Rahmenteilen 20 überbrücken und in üblicher Weise mit Klemmschrauben an den Schenkeln 24 befestigt werden können. In ebenfalls üblicher Weise läßt sich der Palettenrahmen 10 auf vier Stifte 26 aufstecken, die an den vier Ecken eines Schutzgitters 28 befestigt sind.

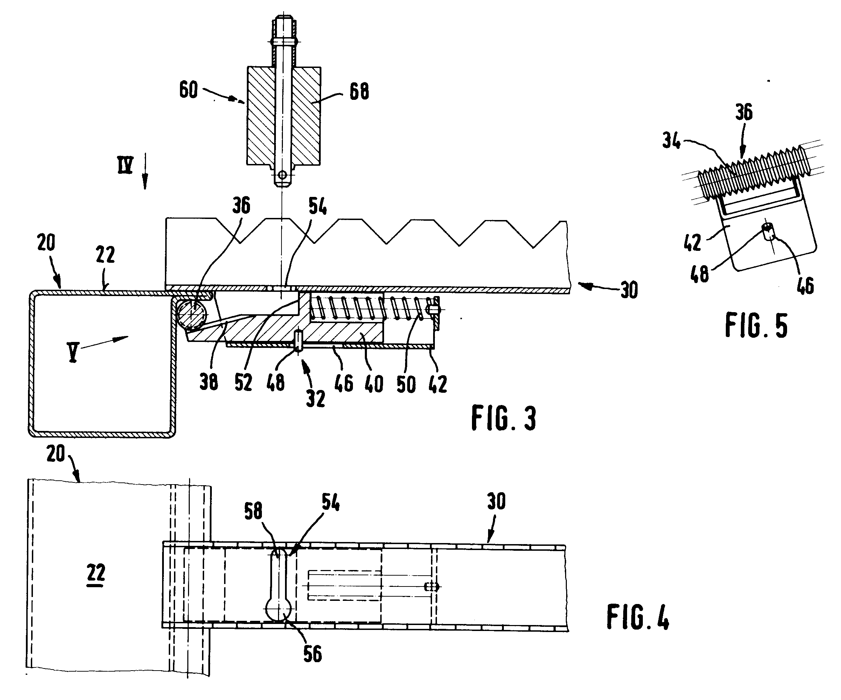

Anstelle der in Fig. 1 abgebildeten Aufnahmeelemente 14 und 18 üblicher Art sind dem Palettenrahmen 10 gemäß Fig. 3 bis 15 Aufnahmeelemente 30 zugeordnet, die im folgenden näher beschrieben werden. Solche Aufnahmeelemente 30 können beispielsweise zum Aufnehmen der in Fig. 1 dargestellten wellenförmigen Gegenstände 12 ausgestaltet sein. Die Art der Gegenstände ist jedoch grundsätzlich beliebig; von Bedeutung ist im folgenden nur die Art der lös- und verstellbaren Befestigung der Aufnahmeelemente 30 an den längsgerichteten Rahmenteilen 20 des Palettenrahmens 10.

Jedes der in Fig. 3 bis 15 dargestellten Aufnahmeelemente 30 hat in der Nähe seiner beiden Enden je eine Klemmvorrichtung 32, die mit einer zahnstangenartigen Profilierung 34 an je einem der längsgerichteten Rahmenteile 20 zusammenwirkt. Die Profilierungen 34 sind bei den dargestellten Ausführungsbeispielen von Gewindestangen 36 gebildet, die an je einem der Rahmenteile 20 unmittelbar unterhalb von dessen Schenkel 24 angeschweißt sind. Anstelle der Gewindestangen 36 könnten auch Zahnstangen an den längsgerichteten Rahmenteilen 20 befestigt sein.

Jede der Klemmvorrichtungen 32 weist ein zur zugehörigen Profilierung 34 passendes Profilteil 38 auf, das von einem zahnstangenartigen und bei den dargestellten Ausführungsbeispielen keilförmig abgeschrägten vorderen Ende eines Schiebers 40 gebildet ist. Der Schieber 40 ist in einem an der Unterseite des Aufnahmeelements 30 befestigten Gehäuse 42 in Längsrichtung des Aufnahmeelements, also quer zur Längsrichtung des zugehörigen Rahmenteils 20, verschiebbar. Der Verschiebebereich des Schiebers 40 ist durch einen Schlitz 46 im Gehäuse 42 begrenzt, durch den ein am Schieber 40 befestigter Sicherungsstift 48 eingreift.

Der Schieber 40 jeder Klemmvorrichtung 32 steht unter der Vorspannung einer Feder 50, die bei den dargestellten Beispielen als Druckfeder ausgebildet und zwischen dem vom zugehörigen Rahmenteil 10 abgewandten Ende des Schiebers 40 und dem benachbarten Ende des zugehörigen Gehäuses 42 angeordnet ist. Zum Aufbringen einer Kraft, die den Schieber 40 gegen den Druck der Feder 50 vom zugehörigen Rahmenteil 20 wegbewegt, ist am Schieber 40 eine von der Feder 50 abgewandte Schulter 52 ausgebildet.

Bei dem Ausführungsbeispiel gemäß Fig. 3 bis 13 ist oberhalb des Gehäuses 42 jeder Klemmvorrichtung 32 und vor der Schulter 52 des zugehörigen Schiebers 40 in das Aufnahmeelement 30 eine Aussparung 54 eingearbeitet, die in der Art eines Schlüsselloches aus einem runden Teil und einem sich daran anschließenden länglichen Teil 58 besteht. Das längliche Teil 58 erstreckt sich quer zur Längsrichtung des Aufnahmeelements 30, also parallel zur Längsrichtung des benachbarten Rahmenteils 20.

Zum gleichzeitigen Rückstellen der Schieber 40 der beiden an jedem Aufnahmeelement 30 angeordneten Klemmvorrichtungen 32 ist gemäß Fig. 3 bis 13 ein Paar Rückstellvorrichtungen 60 vorgesehen, die sich entweder von Hand oder mittels einer nicht dargestellten automatischen Handhabungsvorrichtung üblicher Art betätigen lassen. Jede Rückstellvorrichtung 60 hat eine im dargestellten Beispiel senkrechte Welle 62 mit einem unteren Wellenende 64, das einen radialen Vorsprung 66 in Gestalt eines quer am Wellenende befestigten Stifts aufweist.

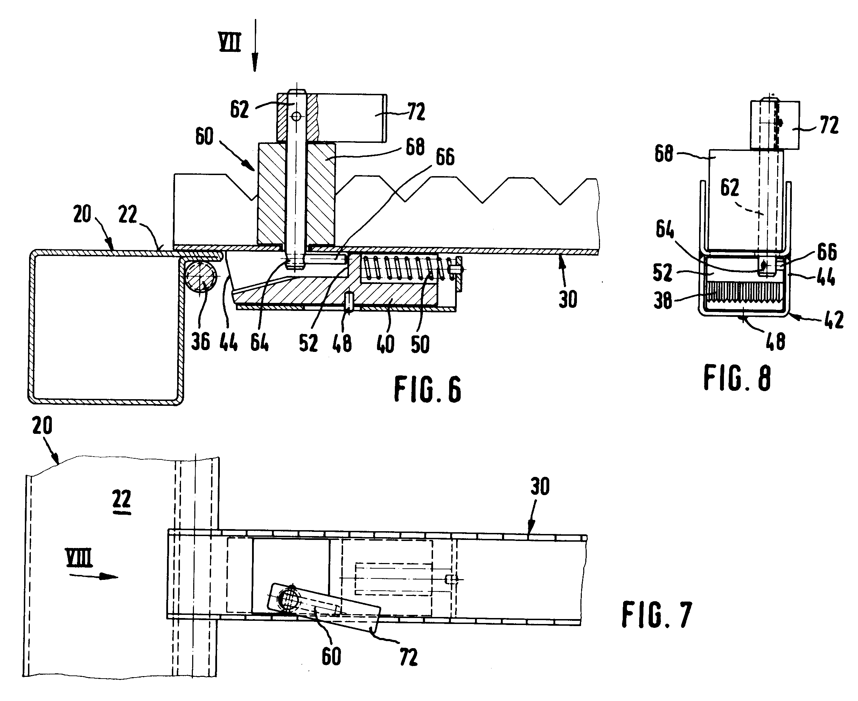

Die Welle 62 ist drehbar in einem Lagerkörper 68 gelagert, der an seiner Unterseite einen Zentrieransatz 70 aufweist. Am oberen Ende der Welle 62 ist ein Hebel 72 befestigt, mit dem sich die Welle in einem Bereich von etwa 100° zwischen einer in Fig. 3, 9 und 10 abgebildeten Ruhestellung und einer in Fig. 6 bis 8 abgebildeten Montagestellung hin- und herdrehen läßt.

Gemäß Fig. 3 bis 5 ist das dort teilweise dargestellte Aufnahmeelement 30 mit einem seiner beiden Enden an einem der längsgerichteten Rahmenteile 20 befestigt und ist mit seinem nicht dargestellten anderen Ende in gleicher Weise an dem anderen längsgerichteten Rahmenteil 20 befestigt. Jede der Klemmvorrichtungen 32 greift mit dem keilförmig abgeschrägten Profilteil 38 ihres Schiebers 40 in die Profilierung 34 am zugehörigen Rahmenteil 20 ein. Dadurch ist das Aufnahmeelement 30 an seinen beiden Enden formschlüssig am Palettenrahmen 10 befestigt.

Der Schrägungswinkel des Profilteils 38 ist so klein, daß zwischen ihm und der Profilierung 34 an der zugehörigen Gewindestange 36 Selbsthemmung besteht; der Schieber 40 ist also schon allein durch die Reibung zwischen der Profilierung 34 und dem Profilteil 38 daran gehindert, sich selbsttätig vom zugehörigen Rahmenteil 20 wegzubewegen. Einer solchen Bewegung widersetzen sich außerdem die Feder 50 und die Reibung zwischen dem Schieber 40 und dem Gehäuse 42.

Zum Lösen des Aufnahmeelements 30 sind somit die beiden Rückstellvorrichtungen 60 erforderlich. In Fig. 3 ist eine der Rückstellvorrichtungen 60 in einer Stellung abgebildet, aus der sie nur senkrecht abgesenkt zu werden braucht, um in die zugehörige Klemmvorrichtung 32 einzugreifen.

Gemäß Fig. 6 bis 8 ist die Rückstellvorrichtung 60 abgesenkt worden, so daß der Zentrieransatz 70 des Lagerkörpers 68 in den runden Teil 56 der Aussparung 54 eingreift. Der Hebel 72 und somit die Welle 62 ist anschließend um etwa 100° im Uhrzeigersinn gedreht worden; dadurch ist der stiftförmige radiale Vorsprung 66 mit seinem Ende gegen die Schulter 52 des Schiebers 40 gestoßen und hat diesen gegen den Druck der Feder 50 verschoben.

Die vollzogene Drehung der Welle 62 um mehr als 90° bewirkt, daß die von der Feder 50 über den Schieber 40 auf den Vorsprung 66 ausgeübte Kraft ein Drehmoment auf die Welle 62 ausübt, das bestrebt ist, den Vorsprung 66 an einer seitlichen Wandung des Gehäuses 42 anliegend zu halten und somit eine Rückdrehung zu verhindern. Dadurch ist der Schieber 40 in seiner zurückgezogenen Stellung verriegelt. Entsprechendes ist mit dem Schieber der nicht dargestellten Klemmvorrichtung 32 am anderen Ende des Aufnahmeelements 30 geschehen. Nun läßt sich das Aufnahmeelement 30 vom Profilrahmen 10 abheben oder in Längsrichtung der Rahmenteile 20 verschieben; beides kann durch von Hand oder mit einem Handhabungsautomaten auf die Lagerkörper 68 der Rückstellvorrichtungen 60 ausgeübte Kräfte geschehen.

In der Stellung gemäß Fig. 6 bis 8 ist die Welle 32 durch ihren um etwa 100° gegen den länglichen Teil 58 der Aussparung 54 verdrehten Vorsprung 66 daran gehindert, aus der Aussparung 54 herausgezogen zu werden; dadurch ist der Lagerkörper 68 mit dem Aufnahmeelement 30 verriegelt und zur Übertragung von Hebe- und/oder Verschiebekräften geeignet.

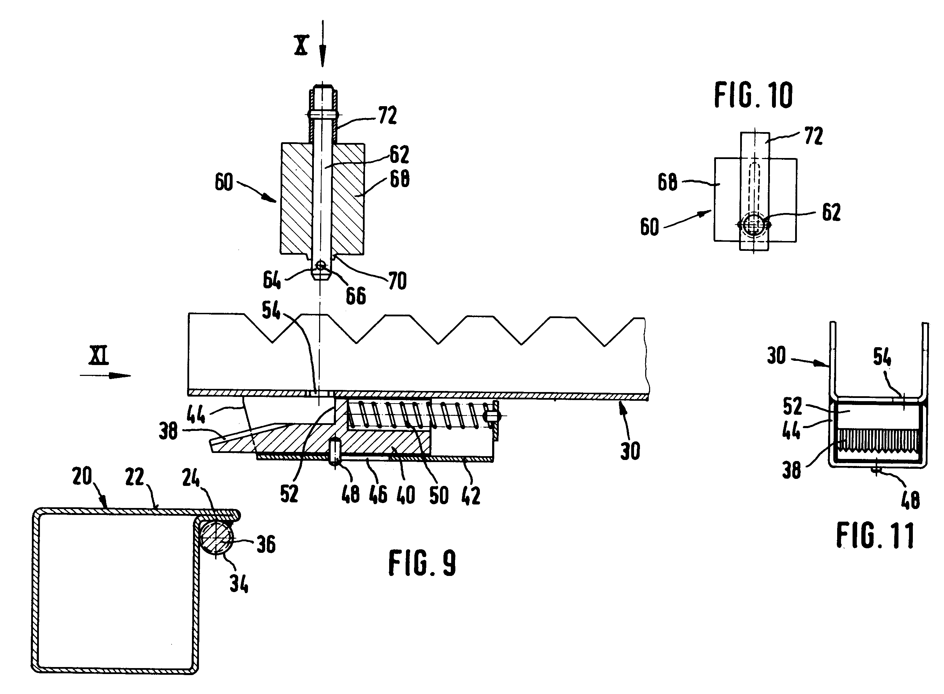

Fig. 9 bis 11 zeigen ein Ende des Aufnahmeelements 30, das vom Palettenrahmen 10 abgehoben worden ist. Die Welle 62 ist in ihre Ruhestellung zurückgedreht worden; anschliessend ist das Wellenende 64 samt radialem Vorsprung 66 nach oben aus der Aussparung 54 herausgezogen worden. Die Rückstellvorrichtung 60 und die gleichgestaltete, nicht gezeichnete zweite Rückstellvorrichtung können nun beispielsweise dazu verwendet werden, ein anderes Aufnahmeelement zu erfassen, auf dem Palettenrahmen 10 abzusetzen und mit dessen längsgerichteten Rahmenteilen 20 an vorbestimmten Stellen zu verriegeln. Die Schrägflächen 44 an den Gehäusen 42 der Klemmvorrichtungen 32 sorgen beim Absetzen eines Aufnahmeelements 30 dafür, daß dieses in bezug auf die beiden längsgerichteten Rahmenteile 20 zentriert wird.

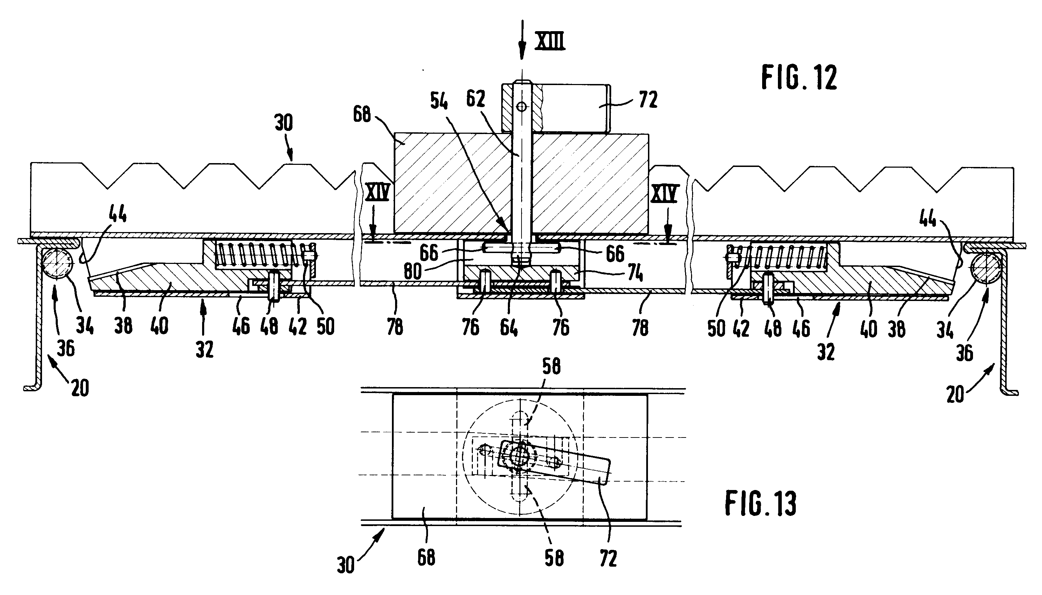

In Fig. 12 bis 15 ist an einem anderen Ausführungsbeispiel dargestellt, wie zwei Klemmvorrichtungen 32 an je einem Ende eines Aufnahmeelements 30 mit einer gemeinsamen Rückstellvorrichtung 60 von den zugehörigen Rahmenteilen 20 gelöst werden können. Anstelle von zwei Aussparungen 54, die je einem der Schieber 40 zugeordnet sind, ist eine einzige Aussparung 54 vorgesehen, die in der Mitte des Aufnahmeelements 30 zwischen den beiden Klemmvorrichtungen 32 angeordnet ist. In diesem Beispiel hat die Aussparung 54 zwei längliche Teile 58, die sich einander diametral gegenüber quer zur Längsrichtung des Aufnahmeelements 30 vom runden Teil 56 der Aussparung wegerstrecken.

Unterhalb der Aussparung 54 ist eine kreisförmige Platte 74 um eine senkrechte Achse, die mit derjenigen der Aussparung übereinstimmt, drehbar gelagert. In bezug auf diese Achse einander diametral gegenüber sind an der Platte 74 zwei achsparellele Stifte 76 befestigt, die durch je eine Lasche 78 gelenkig mit je einem der beiden Schieber 40 verbunden ist. Die Platte 74 hat an ihrer Oberseite eine diametrale Nut 80, deren Mittelebene die Achsen der beiden Stifte 76 enthält. In diese Nut 80 greifen zwei einander diametral gegenüberliegende radiale Vorsprünge 66 ein, die von einem gemeinsamen, quer am unteren Wellenende 64 der Rückstellvorrichtung 60 befestigten Stift gebildet sind.

Fig. 12, 13 und 14 zeigen die Platte 74 in einer Montagestellung, in der die beiden Laschen 78 einander im größtmöglichen Maß überlappen und dadurch jeden der beiden Schieber 40 vom zugehörigen Rahmenteil 20 entfernt halten. Diese Montagestellung ist, wie bei dem zuerst beschriebenen Ausführungsbeispiel, eine Übertotpunktstellung; die von den Federn 50 über die Schieber 40 und Laschen 78 ausgeübten Kräfte erzeugen an der Platte 74 ein Moment, das eine unbeabsichtigte Verdrehung der Platte aus der Montagestellung heraus verhindert.

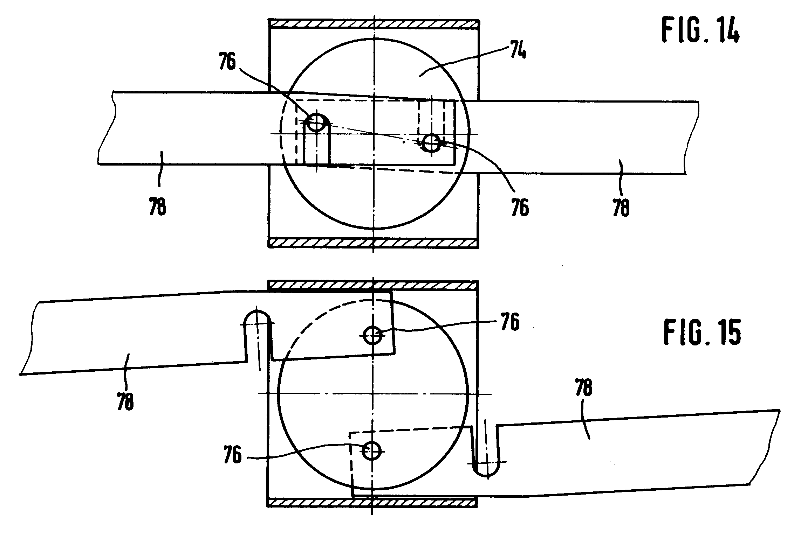

Wenn jedoch die Welle 62 mit dem Hebel 72 gegen den Uhrzeigersinn gemäß Fig. 15 um etwa 100° gedreht wird, vergrößert sich die wirksame Länge der Laschen 78, so daß jeder der beiden Schieber 40 von der zugehörigen Feder 50 zum zugehörigen Rahmenteil hin verschoben wird und in dessen Profilierung 34 eingreift. Durch die Drehung der Welle 62 um etwa 100° haben die radialen Vorsprünge 66 eine Stellung erreicht, in der sie mit den länglichen Teilen 58 der Aussparung 54 fluchten; infolgedessen kann das untere Wellenende 64 samt Vorsprüngen 66 nach oben aus der Aussparung 54 herausgezogen, und die Rückstellvorrichtung 60 insgesamt entfernt werden.

Die dargestellten Paletten sind wegen der einfachen und sicheren Befestigung der Aufnahmeelemente 30 in jeder beliebigen Lage im Raum einsetzbar; beispielsweise kann der Palettenrahmen 10 in einer senkrechten Ebene angeordnet werden. Vor allem für eine solche Anordnung des Palettenrahmens 10 eignen sich Ausführungsformen, bei denen die zahnstangenartigen Profilierungen 34 an oder neben den Auflageflächen 22 ausgebildet sind, wobei die Profilteile 38 wiederum so an den Aufnahmeelementen 30 angeordnet sind, daß sie in die zugehörige Profilierung 34 eingreifen. In diesem Fall können die Schieber 40 glatt, ohne komplementäres Profil, gestaltet sein.

## Patentansprüche

1. Palette zum Bereithalten von Gegenständen (12) in vorbestimmten Stellungen, insbesondere für eine automatisierte Fertigung, mit
   - einem Palettenrahmen (10), der zwei parallel zueinander angeordnete Rahmenteile (20) mit je einer Auflagefläche (22) und je einem nach innen ragenden Schenkel (24) aufweist,
   - Aufnahmeelementen (30), die auf der Auflagefläche (22) je eines Rahmenteils (20) aufliegen und zum Aufnehmen mindestens je eines Gegenstands (12) ausgebildet sind, und
   - Klemmvorrichtungen (32) an beiden Enden jedes Aufnahmeelements (30), die in einem klemmenden Zustand unter den Schenkel (24) des benachbarten Rahmenteils (20) greifend mit einer nach oben gerichteten Klemmkraft das Aufnahmeelement (30) am zugehörigen Rahmenteil (20) festgeklemmt halten und in einem gelösten Zustand eine Verstellung des Aufnahmeelements (30) in Längsrichtung der Rahmenteile (20) zulassen, wobei
   - mindestens eine der Klemmvorrichtungen (32) an jedem Aufnahmeelement (30) einen längs des Aufnahmeelements verschiebbaren Schieber (40) aufweist, dadurch **gekennzeichnet,** daß
   - die Rahmenteile (20) an der Unterseite ihres nach innen ragenden Schenkels (24) je eine zahnstangenartige Profilierung (34) aufweisen,
   - an den Klemmvorrichtungen (32) je ein Profilteil (38) angeordnet ist, das in die Profilierung (34) am zugehörigen Rahmenteil (20) einrastbar ist,

   - die Schieber (40) von einer Feder (50) zum zugehörigen Rahmenteil (20) hin vorgespannt sind, und
   - zum Rückstellen der Schieber (40) gegen die Kraft der zugehörigen Feder (50) und zum Abheben der Aufnahmeelemente (30) vom Palettenrahmen (10) eine Rückstellvorrichtung (60) vorgesehen ist.

2. Palette nach Anspruch 1,
   dadurch **gekennzeichnet,** daß jeder Schieber (40) eine Keilform mit einem im Bereich der Selbsthemmung liegenden Schrägungswinkel hat.

3. Palette nach Anspruch 1 oder 2,
   dadurch **gekennzeichnet,** daß die Profilteile (38) an der Oberseite der Schieber (40) ausgebildet sind.

4. Palette nach einem der Ansprüche 1 bis 3,
   dadurch **gekennzeichnet,** daß die Profilierung (34) von einer am zugehörigen Rahmenteil (20) befestigten Gewindestange (36) gebildet ist.

5. Palette nach einem der Ansprüche 1 bis 4,
   dadurch **gekennzeichnet,** daß die Schieber (40) und zugehörigen Federn (50) in je einem Gehäuse (42) angeordnet sind, das an der Unterseite des zugehörigen Aufnahmeelements (30) befestigt ist.

6. Palette nach Anspruch 5,
   dadurch **gekennzeichnet,** daß die Gehäuse (42) an je einem Ende eine Schräge (44) aufweisen, die das zugehörige Aufnahmeelement (30) beim Aufsetzen auf den Palettenrahmen (10) zentriert.

7. Palette nach einem der Ansprüche 1 bis 6,
   dadurch **gekennzeichnet,** daß jede Rückstellvorrichtung (60) eine Welle (62) aufweist, die ein Wellenende (64) mit einem radialen Vorsprung (66) hat, und jedes Aufnahmeelement (30) mindestens eine Aussparung (54) aufweist, in die das Wellenende (64) in einer Ruhestellung der Welle (62) einsetzbar ist, und in der das Wellenende (64) in eine Montagestellung drehbar ist, in welcher der Vorsprung (66) mindestens einen ihm zugeordneten Schieber (40) gegen die Kraft der zugehörigen Feder (50) vom zugehörigen Rahmenteil (20) wegdrängt.

8. Palette nach Anspruch 7,
dadurch **gekennzeichnet,** daß die Welle (62) in einem Lagerkörper (68) gelagert ist, der einen in der Aussparung (54) zentrierbaren Ansatz (70) aufweist.

9. Palette nach Anspruch 7 oder 8,
dadurch **gekennzeichnet,** daß die Aussparung (54) dem Querschnitt des Wellenendes (64) samt radialem Vorsprung (66) angepaßt und derart angeordnet ist, daß das Wellenende (64) nur in der Ruhestellung der Welle (62) aus der Aussparung (54) herausziehbar ist.

**Claims**

1. A pallet for keeping articles (12) available in predetermined positions, especially for automated production, comprising
   - a pallet frame (10) which includes two parallel frame members (20) positioned in parallel and each having both a support surface (22) and an inwardly projecting limb (24),
   - receptacles (30) resting on the support surface (22) of a frame member (20) each and being formed to receive at least one article (12) each, and
   - clamping devices (32) at either end of each receptacle (30) adapted to hold the receptacle (30) clamped to the corresponding frame member (20) by extending below the limb (24) of the adjacent frame member (20) and exerting an upwardly directed clamping force, when in clamping state, and to permit adjustment of the receptacle (30) in longitudinal direction of the frame members (20), when in released state,
   - at least one of the clamping devices (32) at each receptacle (30) including a slide member (40) which is displaceable along the receptacle,
   **characterized** in that
   - the frame members (20) each have a rack-like profile (34) at the bottom side of their inwardly projecting limb (24),
   - a patterned section (38) each is disposed at the clamping devices (32) and adapted to engage in the profile (34) of the corresponding frame member (20),
   - the slide members (40) are biased by a spring (50) towards the corresponding frame member (20), and

   - a return device (60) is provided for returning the slide members (40) against the pressure of the corresponding spring (50) and for lifting the receptacles (30) from the pallet frame (10).

2. The pallet as claimed in claim 1, characterized in that each slide member (40) has the shape of a wedge with an angle of inclination selected within the range of self-locking.

3. The pallet as claimed in claim 1 or 2, characterized in that the patterned sections (38) are formed at the upper side of the slide members (40).

4. The pallet as claimed in any one of claims 1 to 3, characterized in that the profile (34) is presented by a threaded spindle (36) secured to the corresponding frame member (20).

5. The pallet as claimed in one of claims 1 to 4, characterized in that the slide members (40) and their associated springs (50) are arranged in a housing (42) each which is fastened at the bottom of the corresponding receptacle (30).

6. The pallet as claimed in claim 5, characterized in that the housings (42) have a slope (44) at one end each to center the corresponding receptacle (30) when it is placed on the pallet frame (10).

7. The pallet as claimed in any one of claims 1 to 6, characterized in that each return device (60) comprises a shaft (62) having a shaft end (64) formed with a radial protrusion (66), and that each receptacle (30) has at least one recess (54) which is adapted to receive the shaft end (64), when the shaft (62) is in a position of rest, and in which the shaft end (64) is rotatable into an assembly position in which the protrusion (66) urges at least one associated slide member (40) away from the corresponding frame member (20), against the pressure of the corresponding spring (50).

8. The pallet as claimed in claim 7, characterized in that the shaft (62) is supported in a bearing body (68) which is formed with an extension (70) adapted to be centered in the recess (54).

9. The pallet as claimed in claim 7 or 8, characterized in that the recess (54) is adapted to the cross section of the shaft end (64) including the radial protrusion (66) and is arranged such that the shaft end (64) can be pulled out of the recess (54) only when the shaft (62) is in its position of rest.

**Revendications**

1. Palette pour présenter des objets (12) dans des positions prédéterminées, en particulier pour une fabrication automatisée, comportant:
   - un cadre de palette (10) qui présente deux portions de cadre (20) disposées parallèlement l'une à l'autre, avec chacune une surface de repos (22) et avec chacune une aile (24) orientée vers l'intérieur.
   - des éléments de réception (30) qui reposent sur la surface de repos (22) de chacune des portions de cadre (20) et sont conçus pour recevoir au moins chacun un objet (12), et
   - aux deux extrémités de chaque élément de réception (30), des dispositifs de bridage (32) qui, dans a état exerçant le bridage, en venant en prise sous l'aile (24) de la portion de cadre voisine (20), maintiennent, avec une force de bridage dirigée vers le haut, l'élément de réception (30) bridé contre la portion de cadre correspondante (20) et, dans un état détaché, autorisent un déplacement de l'élément de réception (30) dans la direction longitudinale des portions de cadre (20), palette dans le cas de laquelle,
   - au moins l'un des dispositifs de bridage (32) monté sur chaque élément de réception (30) présente un coulisseau (40) qui peut coulisser dans la direction longitudinale de l'élément de réception, palette caractérisée par le fait que
   - les portions (20) présentent chacune, à la face inférieure de leur aile (24) dirigée vers l'intérieur, un profil (34) du type crémaillère,
   - sur le dispositif de bridage (32) est chaque fois disposée une portion profilée (38) qui peut se cranter dans le profi, (34) prévu sur la portion de cadre correspondant (20),
   - les coulisseaux (40) sont précontraints, par un ressort (50), en direction de la portion de cadre correspondante (20) et
   - un dispositif de recul (60) est prévu pour faire reculer le coulisseau (40) à l'encontre de la force des ressorts correspondant (50) et pour permettre de dégager les éléments de réception (30) d'avec le cadre (10) de la palette.

2. Palette selon la revendication 1, caractérisée par le fait que chaque coulisseau (40) a la forme d'un coin avec un angle de chanfrein dont la valeur se situe sur la plage de l'autoblocage.

3. Palette selon la revendication 1 ou 2, caractérisée par le fait que des portions profilées (38) sont prévues sur la face supérieure du coulisseau (40).

4. Palette selon l'une des revendications 1 à 3, caractérisée par le fait que le profil (34) est formé par une tige filetée (36) fixée à la portion de cadre correspondante (20).

5. Palette selon l'une des revendications 1 à 4, caractérisée Par le fait que les coulisseaux (40) et le ressort correspondant (50) sont disposés dans, chacun, un boîtier (42) qui est fixé à la face inférieure de l'élément de réception correspondant (30).

6. Palette selon la revendication 5, caractérisée par le fait que les boîtiers (42) présentent à chacune de leurs extrémités un chanfrein (44) qui centre l'élément de réception correspondant (30) lorsqu'on le pose sur le cadre (10) de la palette.

7. Palette selon l'une des revendications 1 à 6, caractérisée par le fait que chaque dispositif de recul (60) présente un axe (62) dont une extrémité (64) comporte un doigt radial (66) et que chaque élément de réception (30) présente au moins un évidement (54) dans lequel, dans la position de repos de l'axe (62), on peut insérer l'extrémité (64) de l'axe et dans lequel on peut faire tourner l'extrémité (64) de l'axe, dans une position de montage, dans laquelle le doigt (66) écarte de la portion de cadre correspondante (20) au moins a coulisseau (40) qui lui correspond, à l'encontre de la force du ressort correspondant (50).

8. Palette selon la revendication 7, caractérisée par le fait que l'axe (62) porte dans un corps formant portée (68) qui présente un embout (70) qui peut se centrer dans l'évidement (54).

9. Palette selon la revendication 7 ou 8, caractérisée Par le fait que l'évidement (54) est adapté à la section de l'extrémité (64) de l'axe, y compris le doigt radial (66), et qu'il est disposé de façon que l'on ne puisse extraire l'extrémité (64) de l'axe hors de l'évidement (54) que dans la position de repos de l'axe (62).

FIG. 1

FIG. 2

FIG. 3

FIG. 5

FIG. 4

FIG. 8

FIG. 7

FIG. 6

FIG. 10

FIG. 9

FIG. 11

EP 0 267 533 B1

FIG.12

FIG.13

EP 0 267 533 B1

FIG. 14

FIG. 15

EP 0 267 533 B1